# FASCICULE DE BREVET EUROPEEN

(11) **EP 1 398 698 B1**
(45) Date de publication et mention de la délivrance du brevet: **13.03.2019**
(21) Numéro de dépôt: 03292225.4
(22) Date de dépôt: 10.09.2003
(51) Int. Cl.: G06F 9/48, G06F 9/54

(54) **Procédé et système de gestion d'évènements dans un système embarquè à contraintes temps réel sévères**
Verfahren und System zur Ereignisverwaltung in einem System mit strengen Echtzeitzwangsbedingungen
Method and system for event management in a system with strict real time constraints

(30) Priorité: 12.09.2002 FR 0211321
(43) Date de publication de la demande: 17.03.2004
(73) Titulaire: CENTRE NATIONAL D'ETUDES SPATIALES, 75039 Paris (FR)
(72) Inventeur: Bossard, Francois, 31200 Toulouse (FR)
(74) Mandataire: Gaillarde, Frédéric F. Ch.

(56) Documents cités:
- EP-A- 0 649 089
- US-A- 5 902 352
- US-B1- 6 317 638
- CHIEN S ET AL: "Integrated planning and execution for autonomous spacecraft", AEROSPACE CONFERENCE, 1999. PROCEEDINGS. 1999 IEEE SNOWMASS AT ASPEN, CO, USA 6-13 MARCH 1999, PISCATAWAY, NJ, USA,IEEE, US, vol. 1, 6 March 1999 (1999-03-06), pages 263-271, XP010350379, ISBN: 978-0-7803-5425-8
- Patrick A. Stadter: "Discrete Event Command and Control for Formation Flying of Distributed Small Spacecraft Systems", Proceedings of the 13th Annual AIAA/USU Conference on Small Satellites, SC99-VI-4, 24-26 August 1999, Logan, UT, 1 August 1999 (1999-08-01), pages 1-12, XP55000974, Retrieved from the Internet: URL:http://www.smallsat.org/proceedings/13 /tech-vi/ts-vi-4.pdf [retrieved on 2011-06-20]

## Description

La présente invention concerne un procédé de gestion d'événements pour contrôler le comportement d'un système temps réel soumis à de fortes contraintes de réactivité.

Elle s'applique notamment, mais non exclusivement, aux systèmes temps réel complexes ou autonomes c'est-à-dire qui sont amenés à prendre des décisions d'une manière autonome ou avec une intervention humaine très limitée. Elle s'applique plus généralement à tout système temps réel qu'il soit embarqué ou intégré dans un équipement automatique.

De tels systèmes sont conçus conformément à une architecture logicielle et matérielle notamment pour réagir à des événements identifiés dont les instants d'apparition ne sont le plus souvent pas connus, mais qui ont généralement des liens de causalité entre eux.
La partie matérielle de l'architecture du système est constituée de processeurs, d'équipements électroniques, et de liens de communication entre processeurs et entre les processeurs et les équipements. Les logiciels "applicatifs" et de contrôle du matériel s'exécutent sur cette architecture. Les différents composants de l'architecture sont mis à contribution pour générer les événements, et ce à des degrés divers qui dépendent de la complexité des événements. La partie logicielle des systèmes temps réel complexes est souvent décomposée en sous-systèmes qui contrôlent chacun plusieurs processus physiques de même nature.

Les événements correspondent par exemple à des passages par certaines valeurs de paramètres physiques, externes ou internes au système temps réel. Une interaction humaine est vue comme un tel événement car elle aboutit à la génération d'un signal électrique. L'arrivée d'une date ou l'écoulement d'un délai sont des événements à part entière. En réponse à un événement ou une combinaison d'événements, le système entreprend des actions qui agissent sur son comportement externe ou interne. Les changements de comportement se traduisent par des modifications passagères ou durables des paramètres physiques externes ou internes.

Un système embarqué reçoit des signaux ou des messages de son environnement au travers de capteurs physiques ou d'équipements de télécommunication. Les capteurs physiques reçoivent des signaux prélevés dans les équipements internes au système. Ces dispositifs sont associés à des équipements électroniques qui, si leur état physique le permet, délivrent à un processeur des informations numériques de manière discrète ou continue. Le flux d'informations parvient à un logiciel d'acquisition ou de réception qui est exécuté sur ce processeur. Un tel logiciel d'acquisition qui constitue un premier niveau de logiciel, est conçu pour conditionner les informations reçues et dans certains cas, il peut servir de filtre pour détecter un événement simple à partir d'un profil de données à reconnaître.

Cependant, dans un système complexe, la génération d'événements peut résulter de traitements très élaborés qui demandent des calculs importants comme pour la reconnaissance de formes. Compte tenu des limites de l'échantillonnage ou du calibrage des capteurs physiques, les résultats de calcul sont souvent biaisés. Pour ces raisons, il est souvent nécessaire de faire appel à des modèles de prévision recalés par des acquisitions réelles. Il en résulte que la génération d'événements par ces logiciels sur la base de mesures ou de dates d'apparition consomment beaucoup de ressources (de calcul et de transmission), et ce d'autant plus qu'on les veut exactes et précises.

Par ailleurs, un système temps réel modifie les paramètres physiques de son environnement au travers d'actionneurs physiques ou en envoyant des messages à des équipements de télécommunication. Ces dispositifs sont associés à des appareils électroniques qui, si leur état physique le permet, reçoivent d'un processeur des commandes numériques de manière discrète ou continue.
D'une manière semblable, des actionneurs modifient les paramètres physiques des équipements internes au système. Les commandes d'un actionneur ou les messages de communication sont acheminés et mis en forme par un logiciel de contrôle d'équipement ou de transmission.

La modification d'un ou plusieurs paramètres physiques est effectuée en réponse à un événement par l'exécution par un processeur d'au moins un traitement logiciel de niveau "applicatif". Ce traitement dit de "réaction" correspond à la mise en oeuvre partielle ou totale d'une action spécifiée dans un diagramme d'état et de transitions d'automate et doit ainsi avoir une durée limitée.

Sous l'effet de perturbations plus ou moins fortes et rapides, les valeurs de certains paramètres physiques dévient dans le temps. Pour les maintenir à leurs valeurs de consigne, il est également fait appel à un traitement logiciel "applicatif" qui contrôle le processus physique à une fréquence liée à la constante de temps du processus. Ce traitement de contrôle de processus se présente dans sa forme de base comme une séquence qui appelle les logiciels d'acquisition des mesures de capteurs, effectue des calculs sur ces entrées, puis appelle les logiciels de contrôle des actionneurs pour délivrer les commandes. Cette fonction périodique est assimilée à un traitement de fond dont la durée dépasse le cadre d'un état. Les seuls cas où ce traitement est lié à une transition d'états sont ceux qui modifient son comportement. Ainsi des événements démarrent, interrompent et terminent les occurrences de ce traitement ; d'autres suspendent et redémarrent le cours d'un calcul ; enfin d'autres modifient le contenu opératoire ou les conditions temporelles des opérations - ce qui correspond à un changement de mode opératoire.

Pour représenter les réactions aux événements, il est pratique de modéliser le système sous la forme de diagrammes d'états et de transitions d'automate. La transition d'un état du système à un autre conduit à mener des actions selon des contraintes temporelles : certaines s'exécutent en parallèle tandis que d'autres se déroulent avec des temporisations selon une séquence imposée. Dans un système à contraintes temps réel sévères, les profils d'altérations de paramètres caractérisant un état doivent respecter des délais maximaux de terminaison appelés échéances.

En définitive, lors d'une transition d'états du système, les actions à entreprendre sont caractérisées par des traitements logiciels réalisant les fonctions spécifiées pour le ou les sous-systèmes impliqués. Les profils des comportements temporels de ces fonctions à l'intérieur d'un état doivent être connus et pris en compte. Ainsi, chaque traitement est périodique de période P ou apériodique. Pour chaque traitement, on définit l'événement de déclenchement et l'éventuelle date (délai) de démarrage au plus tôt. Pour un traitement apériodique ou pour chaque occurrence d'un traitement périodique, on définit la date ou l'échéance de fin au plus tard. Pour un traitement périodique, on définit l'événement d'arrêt des déclenchements. Enfin, pour tout traitement, on définit l'événement de terminaison.

La demande de brevet français FR2821940 déposée par le Demandeur décrit un système de gestion du temps comprenant des mécanismes logiciels et matériels génériques permettant notamment de contrôler l'exécution de traitements périodiques et apériodiques.

Toutefois, indépendamment des actions d'une transition, des traitements de contrôle démarrés dans un état antérieur peuvent se poursuivre jusqu'à un changement dans un état ultérieur.
En outre, il est nécessaire que dans chaque état du système temps réel, une liste complète indique les événements interdits, ceux qui sont autorisés mais sans effet, ceux qui provoquent des actions à l'intérieur de l'état, et enfin ceux qui conduisent à un changement d'état. En outre, l'arrivée d'un événement n'est souvent possible que sur une période de temps restreinte. Il est donc également nécessaire de limiter la détection de l'événement à cette période pour éviter les surcharges d'utilisation des ressources.
Le système de gestion du temps décrit dans la demande de brevet français FR2821940, ne permet de prendre en compte ces contraintes d'une manière globale et générique. Au contraire, ces contraintes sont traitées au cas par cas, à chaque réalisation d'un système temps réel. Il en résulte que la conception et la réalisation d'un tel système reste complexe même en utilisant le système de gestion du temps.
Le document US 6317638 décrit également un système basé sur une machine d'état pour traiter des processus temps réel.
Pour résoudre ce problème, la présente invention a pour but de mettre en place des mécanismes logiciels et matériels génériques pour permettre à un système temps réel de réagir à l'arrivée d'événements et de provoquer les actions en conséquence, conformément à des diagrammes d'états et de transitions.
Cet objectif est atteint par la prévision d'un procédé selon la revendication 1.

Selon une particularité de l'invention, si parmi les transitions trouvées, l'événement à traiter est associé à d'autres événements à traiter qui ne sont pas encore arrivés, le traitement superviseur mémorise l'événement à traiter dans une liste d'événements à traiter.

Selon une autre particularité de l'invention, si dans toutes les transitions trouvées, l'événement à traiter n'est pas associé à d'autres événements à traiter qui ne sont pas encore arrivés, et qu'aucune condition d'exécution de transition n'est satisfaite, l'événement à traiter est perdu et le traitement superviseur se remet en attente d'un nouvel événement.

Avantageusement, le traitement superviseur est une tâche apériodique qui se présente sous la forme d'une boucle de traitement comportant un appel à une fonction d'attente d'événement à traiter du système de gestion du temps, le traitement superviseur appelant la fonction d'attente d'événement à traiter à la fin de l'exécution d'une transition ou si aucune transition ne peut être exécutée.

Selon encore une autre particularité de l'invention, les actions exécutées par le traitement superviseur lors de l'exécution d'une transition sont des actions de déclenchement, d'interruption, de terminaison et/ou de changement de mode opératoire de traitements périodiques ou apériodiques.

Selon encore une autre particularité de l'invention, les actions des transitions spécifiées dans le diagramme d'états et de transitions sont associées à des contraintes temporelles définissant si les traitements déclenchés par ces actions doivent être exécutés en parallèles ou séquentiellement, et pour chaque traitement à déclencher, une durée de déphasage de déclenchement, une durée maximum d'exécution, et une période d'activation dans le cas de traitements périodiques.

Avantageusement, dans le cas où des actions d'une transition doivent être exécutées séquentiellement, chaque action commande au système de gestion du temps de générer un événement de fin de traitement à la fin de son exécution au moins partielle, le traitement superviseur se mettant en attente de cet événement avant d'exécuter l'action suivante.

Selon encore une autre particularité de l'invention, le déclenchement d'un traitement par le traitement superviseur est effectué par un appel d'un service du système de gestion du temps spécifiant le traitement à déclencher, un mode opératoire, une durée de déphasage de déclenchement, une durée maximale d'exécution, et une période d'activation dans le cas d'un traitement périodique.

Selon encore une autre particularité de l'invention, ce procédé comprend en outre
- une phase de planification d'une opération à moyen ou long terme, au cours de laquelle un traitement de planification insère une opération dans un plan d'opérations et déclenche un traitement de gestion d'événements planifiés par un appel au système de gestion du temps, associé à un mode d'exécution indiquant que le traitement de gestion d'événements planifiés est déclenché par le traitement de planification,
- une phase de programmation de l'exécution d'une prochaine opération spécifiée dans le plan d'opérations, au cours de laquelle le système de gestion du temps déclenche le traitement de gestion d'événements planifiés qui détecte par le mode d'exécution qu'il a été activé par le traitement de planification, analyse des informations relatives à la prochaine opération à exécuter pour déterminer l'instant d'activation de la prochaine opération, et commande par un appel au système de gestion du temps une nouvelle exécution du traitement de gestion d'événements planifiés à l'instant d'activation de l'opération, associée à un mode d'exécution indiquant que le traitement de gestion d'événements planifiés a été déclenché par lui-même,
- une phase de déclenchement de l'exécution d'une opération, au cours de laquelle le système de gestion du temps déclenche le traitement de gestion d'événements planifiés qui détecte par le mode d'exécution qu'il a été activé par lui-même, et commande au système de gestion du temps de générer un événement de déclenchement de l'opération à destination du traitement superviseur, et
- une phase d'exécution de l'opération, au cours de laquelle le traitement superviseur reçoit l'événement de déclenchement de l'opération et exécute l'opération conformément à une transition prévue dans le diagramme d'états et de transitions.

Alternativement, l'exécution d'une opération est subordonnée à l'arrivée d'au moins un autre événement émis par un traitement applicatif.

Selon encore une autre particularité de l'invention, à la suite de la commande de génération d'un événement de déclenchement d'opération, le traitement de gestion d'événements planifiés analyse des informations relatives à une prochaine opération à exécuter définie dans le plan d'opération, pour déterminer l'instant d'activation de l'opération, et commande par un appel au système de gestion du temps une nouvelle exécution du traitement de gestion d'événements planifiés à l'instant d'activation de l'opération, associée à un mode indiquant que le traitement de gestion d'événements planifiés a été déclenché par lui-même.

De préférence, avant de prendre en compte une nouvelle opération, le traitement de gestion d'événements planifiés attend la fin de l'opération planifiée en cours d'exécution, signalée par le traitement superviseur.

L'invention concerne également un système temps réel selon la revendication 13.

Avantageusement, ce système comprend en outre un traitement planificateur pour gérer un plan d'opérations dans lequel sont planifiées des opérations à exécuter à moyen ou long terme des opérations, et un traitement de gestion d'événements planifiés ayant accès au plan d'opérations pour déterminer l'instant où une prochaine opération spécifiée dans le plan d'opérations doit être exécutée, et pour commander la génération d'un événement spécifique à destination du traitement superviseur lorsqu'une opération doit être exécutée.

Un mode de réalisation préféré de l'invention sera décrit ci-après, à titre d'exemple non limitatif, avec référence aux dessins annexés dans lesquels
La figure 1 représente l'architecture générale d'un système utilisant le système de gestion du temps et le superviseur selon l'invention ;
La figure 2 représente l'enchaînement des différents états d'un traitement périodique, selon l'invention ;
La figure 3 représente l'organisation d'une base de données d'automate apparaissant dans le système représenté sur la figure 1 ;
La figure 4 représente une variante de l'architecture générale du système représenté sur la figure 1 comprenant en outre un sous-système de planification de traitements.

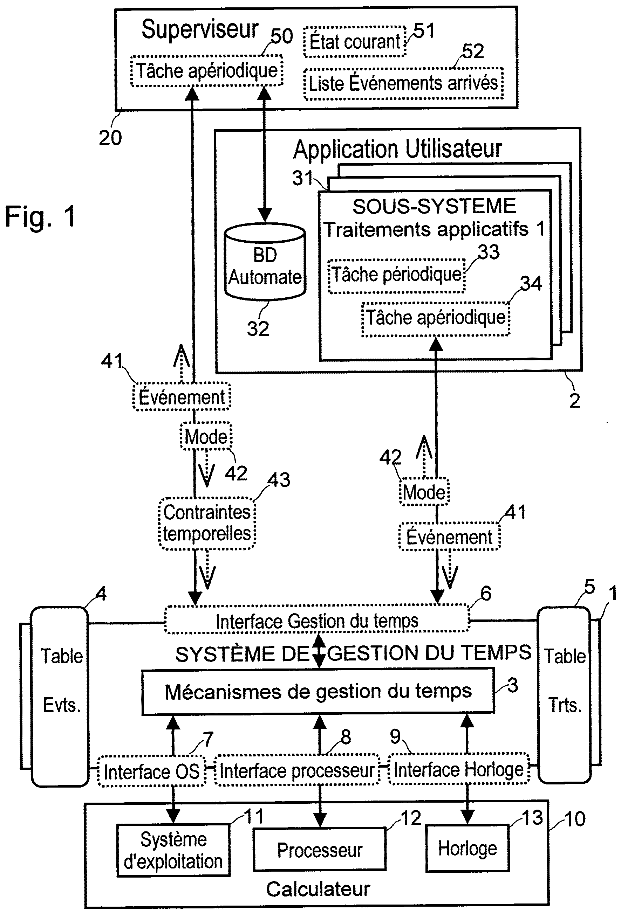

Le système représenté sur la figure 1 est constitué de composants logiciels et matériels répartis en trois couches. La couche supérieure contient l'application temps réel 2 réalisant les fonctions définies par l'utilisateur, la couche intermédiaire comprend un système de gestion du temps 1 qui offre à l'application utilisateur 2 les services dont elle a besoin pour gérer le temps, ces services étant regroupés dans une interface utilisateur 6 et faisant appel à des mécanismes 3 internes au système 1. Un tel système de gestion du temps est par exemple décrit dans la demande de brevet français n° 01 03334 déposée par le Demandeur.

Toutes les ressources matérielles et logicielles de bas niveau, c'est-à-dire le processeur, sont situées dans la couche inférieure qui comprend des ressources matérielles 12 comportant notamment un processeur 10, un système d'exploitation 11 du processeur, par exemple constitué d'un noyau temps réel ou d'un exécutif temps réel, et un service d'horloge 13 fournissant des temps absolus.

Le système d'exploitation 11 offre des services temps réel de bas niveau, et en particulier des mécanismes de synchronisation et un mécanisme de répartition des ressources matérielles entre les différents traitements, couramment appelé ordonnanceur. Dans cet environnement, le service de gestion du temps 1 est invoqué par les traitements applicatifs ou système pour qu'ils interagissent dans le temps de manière rapide et contrôlée. Il ne se substitue pas au noyau temps réel 11 mais l'utilise pour gérer l'allocation du processeur 10 aux traitements logiciels lancés en parallèle.

En vue de le rendre portable vers d'autres environnements matériels et réutilisable pour d'autres applications, le système de gestion du temps 1 est réalisé de préférence de manière générique, c'est-à-dire d'une manière indépendante des ressources matérielles et logicielles de bas niveau, utilisées par l'application 2. A cet effet, il fait appel à une interface 7 avec le noyau temps réel 11, regroupant tous les services de bas niveau appelés par le système de gestion du temps 1, notamment pour réaliser les services utilisateur regroupés dans l'interface 6. Il fait également appel à une interface 8 avec le matériel, cette interface regroupant tous les services rendus par l'unité de traitement 12, appelés par le système de gestion du temps 1, et une interface 9 avec l'horloge 13.

Tous les traitements de l'application 2, dont il faut gérer les déclenchements d'exécution et les arrêts, sont définis dans une table 5 rassemblant leurs noms ou identificateurs respectifs. Chaque traitement possède donc un identificateur unique défini par l'utilisateur de manière statique dans la table des traitements 5 qui est partagée par les différentes couches de l'architecture du système. De cette manière chaque traitement peut être reconnu à la fois par le système de gestion du temps 1 et par l'application 2. La table des traitements 5 permet à l'utilisateur d'utiliser un système de nommage propre, au lieu des identificateurs propres au noyau temps réel 11, ce qui évite les confusions. D'autre part, cette table permet de regrouper les traitements ou tâches dans des classes et des sous-classes d'après leurs propriétés. On peut ainsi définir par exemple, la classe des utilisateurs du système de gestion du temps.

De même, tous les événements circulant entre les différents traitements de l'application 2, sont définis dans une table 4 rassemblant leurs noms ou identificateurs respectifs.

Généralement, la spécification d'un système temps réel décrit de manière macroscopique les fonctions de sous-systèmes 31 qui le composent et leurs entrées/sorties ainsi que les événements système qui conditionnent les activités de ces fonctions. Le comportement de cette architecture fonctionnelle peut être modélisé par un automate représenté sous la forme d'un diagramme d'états et de transitions.

Pour simplifier davantage la réalisation d'applications temps réel, la présente invention vise à exploiter une telle modélisation par un automate en prévoyant un superviseur système générique 20 conçu pour exécuter l'automate modélisant le fonctionnement de l'application, la description de l'automate étant définie dans une base de données 32 rassemblant des tables d'états et de transitions spécifiques de l'application.

Chaque sous-système 31 regroupe des traitements qui peuvent être classés en traitements "applicatifs" et en traitements d'acquisition d'entrées ou de délivrance de sorties, ces traitements pouvant s'exécuter en parallèle ou en série. Les traitements des sous-systèmes doivent correspondre aux fonctions caractérisant les états de l'automate modélisant l'application. Des fonctions effectuant des calculs semblables qui ne sont jamais exécutées en parallèle peuvent être regroupées dans un même traitement. Il suffit alors de lancer le traitement en désignant un mode de fonctionnement pour sélectionner la fonction désirée.

Bien entendu, on peut également envisager de modéliser le fonctionnement chaque sous-système par un tel diagramme d'états et de transitions.

Les interactions dans le temps des sous-systèmes 31 sont effectuées en générant des événements 41 représentatifs du comportement externe ou interne du système temps réel en faisant appel au système 1 de gestion du temps. Tous les événements générés 41 (ou seulement certains d'entre eux référencés comme des événements système) sont ensuite traités par le superviseur 20 qui détermine à l'aide de la description de l'automate dans la base de données 32 si une transition vers un autre état doit être déclenchée en fonction de l'état courant 51 de l'automate et des événements 52 non encore traités qui viennent d'être générés.

Par ailleurs, on différencie les événements liés à l'observation du déroulement des traitements, les événements liés à des contraintes temporelles d'exécution et les événements purement applicatifs introduits par l'utilisateur.
Néanmoins, l'ensemble de ces événements définis par l'utilisateur, sont associés aux traitements.

Les événements d'observation représentent les différentes transitions significatives dans le déroulement des traitements. Bien que les événements sont définis par l'utilisateur, le système de gestion du temps 1 assure l'apparition de ces événements et leurs enregistrements dans des relevés d'observations. Le rôle de ces événements est de tracer les comportements dynamiques des traitements, ainsi que les demandes d'activation.

Certains événements temporels peuvent caractériser le dépassement d'échéance pour les traitements, d'autres peuvent caractériser le dépassement d'un délai pour le franchissement d'une étape dans un traitement. Dans la limite des possibilités du système, l'utilisateur est libre de définir autant d'événements qu'il le souhaite et de disposer ainsi, de points de surveillance temporels dans son application.
L'apparition d'un événement de ce type conduit à un enregistrement dans le relevé d'observations du traitement et peut éventuellement conduire à la notification de l'événement auprès d'un traitement superviseur, s'il en existe un.

En plus des événements liés aux aspects temporels, l'utilisateur peut définir des événements d'une manière indépendante de toute considération temporelle. En effet, il peut dans un traitement décider de demander au système de gestion du temps 1 de lever un tel événement. Outre l'enregistrement de l'événement dans le relevé d'observations du traitement auteur de la requête, l'événement peut être notifié auprès d'un traitement superviseur afin que celui-ci puisse réaliser les opérations adéquates.

Il est donc nécessaire qu'au sein d'une structure, l'utilisateur définisse les différents événements qui peuvent transiter entre les traitements ou qui sont directement notifiés auprès d'un traitement spécifique, par le système de gestion du temps lui-même.

De manière générale, on distingue trois catégories d'événements :
- les événements locaux utilisés pour notifier le franchissement d'étapes à l'intérieur d'un sous-système 31,
- les événements globaux non critiques utilisés pour notifier le franchissement d'étapes significatives pour l'exécution de l'automate, et transmis au superviseur 20, et
- les événements critiques appelés événements majeurs qui regroupent les événements définis et signalés comme tels par l'utilisateur, et les événements liés aux erreurs temporelles détectées par le système 1.

La surveillance des événements critiques est gérée par le superviseur 20 dès qu'ils apparaissent lors de l'exécution du traitement. Une telle surveillance exige donc une rapidité dans la prise en compte de tels événements.

Bien que les mécanismes associés à ces trois catégories d'événements diffèrent, aucune distinction n'est faite dans la caractérisation générale des événements. En effet, tout événement est représenté par un identificateur unique, défini par l'utilisateur dans la table des événements 4.

Le système de gestion du temps 1 est conçu pour prendre en compte deux catégories de traitements, à savoir les traitements applicatifs périodiques 33 ou apériodiques 34, et le traitement superviseur 50 apériodique qui est exécuté par le superviseur 20 assurant la prise en compte d'événements d'exécution et le déclenchement des traitements applicatifs 33, 34 pour exécuter l'automate.

Chaque traitement est associé au moment de son déclenchement à une phase et s'il est périodique à une période.
La phase d'un traitement correspond au temps séparant un instant de référence et la demande d'activation du traitement par le système de gestion du temps au système d'exploitation. Elle permet de répartir de façon déterministe dans le temps les demandes d'activations de chacun des traitements par rapport à ce temps de référence.
La période d'exécution d'un traitement périodique 33 est le temps dans une unité définie par le système de gestion du temps, séparant deux itérations (deux demandes d'activation) du traitement.

Pour les traitements périodiques et apériodiques, on définit également une échéance qui correspond au temps maximum alloué à un traitement pour s'exécuter depuis sa demande d'activation par le système 1. Dans le cas où un traitement en cours d'exécution n'a pas atteint son terme dans l'échéance impartie, le traitement superviseur 50 reçoit une notification de dépassement d'échéance.

D'une manière générale, les paramètres temporels renseignés lors des appels de services du système de gestion du temps 1 (phase, période, ...) doivent être exprimés dans une unité dite unité "utilisateur" que l'on définit arbitrairement, par exemple à la milliseconde (ms). Les informations de temps absolu ou de date sont exprimées dans l'unité de l'horloge bord et sont donc dépendantes de l'implémentation.
L'unité de temps utilisée par le système en interne peut être différente de l'unité utilisateur et demeure proche de l'unité de temps employée par la source physique temporelle externe. L'ordre de grandeur de cette unité est la microseconde (µs).

En outre, les traitements peuvent avoir d'autres caractéristiques complémentaires, mais celles-ci sont associées soit à des fonctionnalités spécifiques, soit à la manière dont est implémenté le système de gestion du temps 1. Il s'agit par exemple d'informations liées à la surveillance du déroulement du traitement.

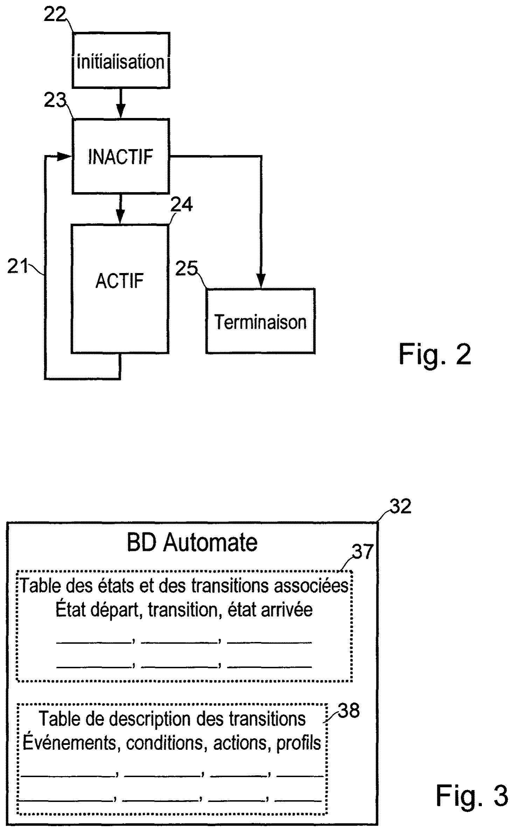

Pour pouvoir être déclenchés ou arrêtés par le service de gestion du temps 1, les traitements "applicatifs" doivent se présenter sous la forme d'une boucle de traitement à plusieurs états. Tel que représenté sur la figure 2, les états d'un traitement sont les suivants :
- initialisation 22,
- inactif 23,
- actif 24, et
- terminaison 25.

A tout instant, un traitement applicatif est caractérisé par un et un seul de ces états. Le système de gestion du temps 1 a pour objectif de réaliser, sur sollicitation de l'application, les transitions entre ces différents états.
Ces transitions surviennent suite à l'apparition d'événements temporels détectés par le système ou suite à l'apparition d'événements applicatifs définis et introduits par l'utilisateur.

Les traitements périodiques doivent être chacun encapsulés dans une boucle infinie 21 dans laquelle l'exécution de chaque itération est soumise à une attente dans l'état inactif 23, de déclenchement par le système de gestion du temps 1 (figure 2).

Cette structure de traitement est également préférable dans le cas d'un traitement apériodique, et en particulier dans le cas du traitement superviseur 50. Elle est en outre indispensable pour que le service de gestion du temps 1 puisse surveiller l'échéance du traitement.

D'une manière générale, les services de l'interface utilisateur 6, offerts par le système de gestion du temps 1 comprennent :
- des fonctions de contrôle du système de gestion du temps 1,
- des fonctions de gestion des traitements périodiques et apériodiques, et
- des fonctions de suivi temporel des traitements et de gestion des erreurs éventuelles.

Le système de gestion du temps doit pouvoir être activé et arrêté à l'initiative de l'utilisateur par exemple par le traitement superviseur 50. Le contrôle du système comprend donc les deux fonctions suivantes :
- "Initialiser service", et
- "Arreter_service".

La fonction "Initialiser_service" a pour objectif d'initialiser les structures internes et les mécanismes de contrôle temporel du système 1, c'est-à-dire, de définir un certain nombre de caractéristiques de fonctionnement du système 1 et de description du contexte général d'exécution du système.
Ces caractéristiques sont tributaires de l'implémentation physique et logicielle de la plate-forme cible (microprocesseur, système d'exploitation, ...) et de l'application 2. Parmi ces caractéristiques, on retrouve de façon générale le nombre maximal de traitements gérés par le système, les unités de temps employées, ainsi que la résolution et la précision temporelle. D'autres caractéristiques sont liées de façon plus précise au contexte d'implémentation, c'est-à-dire, relèvent du type de microprocesseur du calculateur ou du système d'exploitation par exemple.

La spécification de la fonction d'initialisation est standard à toutes les implémentations du système. Il en résulte que la définition des différentes caractéristiques du système est effectuée de manière statique lors de l'implémentation de celui-ci.

La fonction "Arreter_service" permet de mettre fin à l'activité du système, à condition que l'ensemble des traitements qui lui sont confiés, soient terminés. L'utilisateur a donc la charge de procéder à l'arrêt des traitements dont la gestion a été confiée au système 1, avant d'effectuer l'appel de cette fonction.

La gestion des traitements périodiques et apériodiques comprend notamment les fonctions suivantes :
- "Accepter declenchement",
- "Declencher_traitement",
- "Declencher_traitement_date",
- "Differer_traitement",
- "Differer_traitement_date",
- "Geler traitement", et
- "Terminer_traitement",

La fonction "Accepter_declenchement" effectue la prise en charge par le système de l'activation d'un traitement périodique ou apériodique. L'appel de cette fonction entraîne le blocage du traitement à l'origine de la requête, qui passe alors dans l'état inactif 23 (figure 2), jusqu'à ce que le système 1 effectue la demande d'activation le concernant auprès du noyau temps réel. Dès qu'un autre traitement a renseigné le système 1 sur ses paramètres d'activation : phase, période, ..., le système 1 prend en charge l'activation du traitement et le libère de son attente dans les délais correspondants. Cette libération s'accompagne d'un événement transmis au traitement lui indiquant son mode d'exécution : soit il exécute normalement son traitement périodique (passage à l'état actif 24), soit il sort de la boucle et exécute une séquence de terminaison (passage à l'état de terminaison 25) dans le cas où une telle demande a été effectuée préalablement par un autre traitement.

Après une phase d'initialisation 22 (figure 2), tout traitement périodique et la plupart des traitements apériodiques utilisent la fonction "Accepter_ déclenchement" pour se mettre en attente de déclenchement. En l'absence de signal de déclenchement, cette fonction met le traitement en attente, ce qui permet d'attribuer le processeur à un autre traitement. Ce point de synchronisation spécifique est utilisé pour tous les types de déclenchement. Lorsqu'il est atteint et qu'un signal déclenchement arrive, le traitement applicatif 33, 34 récupère un paramètre de mode opératoire qu'il doit exploiter pour changer son programme d'exécution. Une tâche apériodique 34 est déclenchée suite à une demande adressée au service de gestion du temps par le superviseur 20 ou par toute tâche applicative. Une tâche périodique 33 est déclenchée initialement sur demande adressée au service de gestion du temps par le superviseur ou par toute tâche applicative. Les déclenchements suivants sont faits automatiquement par le service de gestion du temps 1 au rythme de la période. Les déclenchements automatiques sont interrompus sur demande adressée au service de gestion du temps par le superviseur ou par toute tâche applicative. Après interruption, il est possible sur demande de déclencher au coup par coup ou périodiquement le même traitement : en effet rien ne distingue a priori une tâche périodique d'une tâche apériodique.

Avant toute demande de déclenchement, un traitement au moins de l'application 2 doit définir le temps de référence utilisé par le système pour mettre en phase dans le temps les demandes d'activation des différents traitements.

Le système de gestion du temps 1 se réveille de lui-même, lorsque l'instant de déclenchement est atteint et met à jour ses informations de réveil. Il effectue alors auprès de l'exécutif temps réel une demande d'activation pour les traitements concernés. L'activation effective du traitement périodique, c'est-à-dire la fin de son attente sur l'appel de la fonction "Accepter_declenchement" et la poursuite de son activité, sont tributaires de la politique d'ordonnancement appliquée par l'exécutif temps réel. Le cumul des demandes de déclenchements est admis dans la mesure où l'implémentation l'accepte. Si le seuil de cumul est franchi, une erreur est signalée au superviseur.
Une fois que le traitement concerné est activé par l'ordonnanceur de l'exécutif, celui-ci sort de l'appel "Accepter_declenchement" (passage de l'état inactif 23 à l'état actif 24 ou de terminaison 25), et s'exécute (état 24) avant de revenir en position d'attente (état 23) en appelant à nouveau la fonction "Accepter declenchement", ou bien se termine en exécutant ses instructions de terminaison à l'état 25.
Dans le cas d'une activation périodique, un nouveau déclenchement est programmé par le système 1 pour se produire au début de la prochaine période.

L'état demandé pour ce traitement est retourné sous la forme d'un événement par l'appel de la fonction, qui prend comme valeur l'un des identificateurs réservés dans la table des événements 4 pour les besoins du déclenchement. Les identificateurs d'événements utilisés par cette fonction sont par exemple :
- "Fin normale" lorsqu'une demande d'arrêt a été effectuée par un autre traitement auprès du système 1,
- "Fin anormale" lorsqu'une demande d'arrêt sur anomalie a été effectuée par un autre traitement auprès du système 1 ; le traitement doit alors se terminer par une séquence spécifique,
- "Normal" lorsqu'une demande d'activation a été effectuée par un autre traitement pour passer dans un mode appelé "Normal", et
- "Reconfiguration" lorsqu'une demande d'activation a été effectuée par un autre traitement pour passer dans un mode de reconfiguration.

Au niveau programmation, l'appel de la fonction "Accepter_declenchement" s'insère dans le modèle suivant :

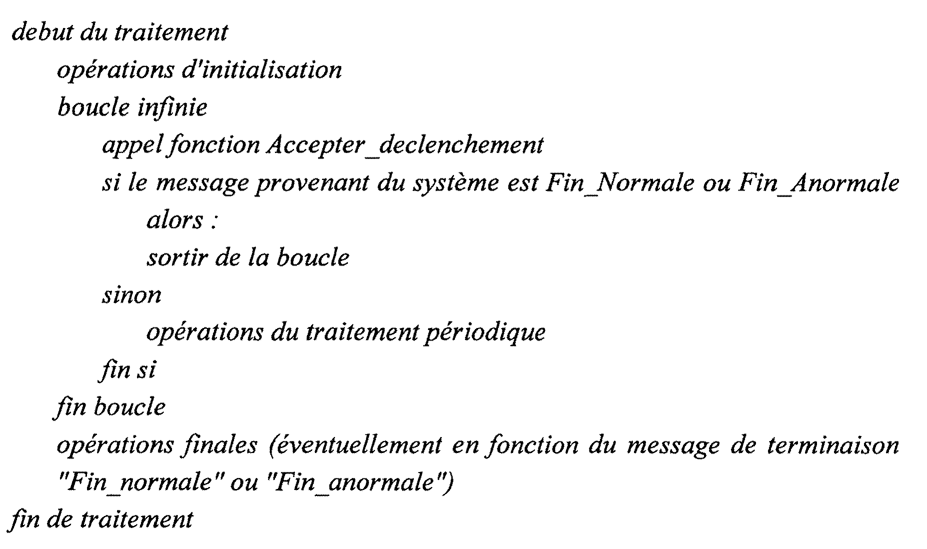

La fonction "Declencher_traitement" permet d'autoriser le déclenchement d'un traitement, et de mémoriser de nouveaux paramètres d'activation du traitement. Cette fonction reçoit en entrée un identificateur de traitement, des valeurs de phase, période (pour un traitement périodique) et échéance, ainsi qu'un paramètre définissant un mode opératoire de fonctionnement. Les nouveaux paramètres d'activation sont alors utilisés en permanence par le système pour actualiser la gestion des demandes d'activation des traitements.
Tout traitement peut demander au système 1 de déclencher périodiquement ou apériodiquement un autre traitement, en utilisant la fonction "Declencher_ traitement".

Lorsque l'information de phase est égale à une valeur particulière prédéfinie, par exemple -1, cela signifie que la demande d'activation du traitement est immédiate. Lorsque l'information de phase est nulle, cela signifie que l'activation du traitement doit être effectuée avec une phase nulle par rapport à l'instant de référence courant, c'est-à-dire à l'instant de référence qui se situe plus tard que l'instant courant.
Si l'information de période est nulle, cela signifie que l'activation du traitement est apériodique.

L'information d'échéance permet de définir le temps maximum alloué au traitement pour s'exécuter depuis sa demande d'activation par le système. Un événement majeur de dépassement d'échéance est signalé au traitement superviseur si le traitement n'atteint pas son terme dans le délai imparti. Une valeur particulière pour ce paramètre, par exemple nulle, signifie qu'il n'y a pas d'échéance à surveiller pour le traitement considéré.

Si l'information d'échéance est fournie dans l'appel de cette fonction, le système de gestion 1 surveille l'échéance d'exécution du traitement. L'instant correspondant à la date de fin d'échéance est recalculé à chaque demande d'activation du traitement concerné par le système 1 et constitue une date de réveil de celui-ci. Si le traitement n'a pas atteint à nouveau la fonction "Accepter_declenchement" avant la date d'échéance, le système 1 se réveille de lui-même à cet instant et engage le traitement suivant.

Dans le cas où le réveil du système 1, prévu pour cette échéance, intervient avant que le traitement concerné ait terminé la partie récurrente 24 de son exécution, le système transmet l'événement associé à ce dépassement d'échéance globale auprès d'un traitement superviseur qui s'est mis en attente de réception d'un événement grâce à l'appel de la fonction "Accepter_evenement" décrite plus loin dans la description. Si aucun traitement n'a effectué cet appel, alors aucun message n'est transféré par le système 1. Si un tel traitement existe et qu'il n'est pas en train de traiter un événement antérieur, ce nouvel événement est traité immédiatement par le traitement superviseur, sinon il est mémorisé dans une file d'attente d'événements. Ce mécanisme appliqué à une erreur de dépassement d'échéance n'a aucune portée sur le traitement responsable de son apparition.

Si le traitement atteint la fonction "Accepter_declenchement" avant la date d'échéance, le réveil du système associé à l'échéance est désactivé.

Le paramètre d'entrée "Mode" de cette fonction permet de transmettre au traitement concerné un message de changement de mode opératoire : activation d'un traitement selon un mode opératoire, terminaison du traitement selon un mode opératoire, ... Le mode doit être choisi parmi les symboles réservés à l'activation dans la table des événements 4.
Le changement de mode est effectué à la prochaine activation du traitement concerné.

On peut prévoir une valeur particulière par défaut pour tout paramètre qu'on ne désire pas modifier.

Il est important de noter à ce sujet que pour un traitement périodique, une autorisation de déclenchement remplace les paramètres courants d'activation mis en place lors d'une autorisation antérieure. En outre, pour un traitement apériodique, il est possible de cumuler plusieurs autorisations de déclenchement, à condition que celles-ci soient immédiates Dans ce cas, les échéances fournies en paramètre d'appel sont cumulées selon les conventions décrites plus loin dans la description. Par contre, une autorisation de déclenchement différé remplace les paramètres d'activation courants mis en place lors d'une autorisation antérieure de déclenchement différé. Cette contrainte se justifie pour des raisons de simplicité de réalisation du système de gestion du temps 1.

La fonction "Declencher_traitement_date" permet d'autoriser le déclenchement d'un traitement à une date absolue, et de mémoriser de nouveaux paramètres d'activation du traitement. Cette fonction est analogue à la fonction "Declencher_traitement", à la différence qu'elle reçoit en entrée une date absolue au lieu d'une valeur de phase. Les codes d'erreurs retournés par ces deux fonctions sont les mêmes, sauf ceux concernant la phase qui sont remplacés dans la fonction "Declencher_traitement_date" par le code d'erreur "Date non conforme" dans le cas où la date absolue passée en paramètre n'est pas conforme aux contraintes du système.

L'utilisation des fonctions "Declencher_traitement" ou "Declencher_traitement_ date" et "Accepter_declenchement" est effectuée de la manière suivante. Après une séquence d'initialisation, le traitement N fait appel à la fonction "Accepter_declenchement" pour se mettre en attente d'activation par un autre traitement, en l'occurrence, le traitement superviseur 50.

Pendant ce temps, le traitement superviseur est exécuté et atteint l'appel de la fonction "Declencher_traitement" désignant le traitement N. L'appel de cette fonction permet de demander au système 1 de mémoriser des paramètres d'activation (phase ou date d'activation, période, mode, ...) pour le traitement N, sous la forme d'un événement d'activation qui est inséré dans une file d'attente. L'appel de cette fonction retourne un code de retour. Lorsque l'événement ainsi inséré est le prochain à traiter, le système 1 programme un compteur avec la différence entre la date d'activation du traitement N et la date courante.
Lorsque le compteur arrive à échéance, le système 1 envoie un événement signifiant un mode d'activation ou un mode de terminaison en tant que paramètre de retour de la fonction "Accepter_déclenchement", ce qui débloque le traitement N, la séquence exécutée par celui-ci dépendant de ce code de retour. Si le code de retour est un mode d'activation, le traitement N exécute la séquence pour laquelle il a été conçu, puis se remet en attente en appelant à nouveau la fonction "Accepter_declenchement".

La fonction "Differer_traitement" permet de mettre en sommeil l'exécution du traitement qui appelle cette fonction, pendant une certaine durée passée en paramètre. Cette fonction demande au système de gestion du temps 1 de suspendre l'exécution du traitement effectuant la requête pendant la durée passée en paramètre. L'appel de cette fonction retourne l'un des codes d'erreur suivants renseignant sur l'aboutissement de l'opération : "Ok", "Service_non_ actif' et "Delai_non_conforme" lorsque le paramètre d'entrée n'est pas conforme aux contraintes du système, en l'occurrence, qu'il dépasse les capacités des ressources temporelles (horloge 13).

La fonction "Differer_traitement_date" permet de mettre en sommeil l'exécution du traitement qui appelle cette fonction, jusqu'à une date absolue, passée en paramètre. Cette fonction est analogue à la fonction "Differer traitement" mis à part qu'elle reçoit en entrée une date absolue à la place d'une durée.
Le traitement qui invoque la fonction "Differer traitement" voit aussitôt son exécution suspendue. Le système 1 prend en compte les informations de réveil de ce traitement et met à jour une liste de réveils. L'exécutif temps réel active un autre traitement selon sa politique d'ordonnancement. Cette action conduit également à un enregistrement dans le relevé d'observation du traitement concerné.

Le système de gestion du temps se réveille de lui-même, lorsque l'instant de reprise d'un traitement est atteint, et met à jour ses informations de réveil. L'exécutif temps réel est ensuite sollicité par le système pour reprendre l'exécution du traitement concerné.

Il est important de souligner que pour des raisons de simplicité de réalisation du système de gestion du temps 1, les fonctions "Differer traitement" ou "differer_traitement_date" sont incompatibles avec d'autres fonctions mettant en jeu des délais. Les conséquences pratiques sont les suivantes :
- si un traitement programme un déclenchement de traitement complémentaire (voir plus loin dans la présente description), l'appel consécutif à une fonction de mise en sommeil d'un traitement annule le déclenchement correspondant ;
- si un traitement programme une notification immédiate avec délai maximum jusqu'à la prochaine notification, l'appel consécutif à une fonction de mise en sommeil d'un traitement empêche la détection d'un dépassement éventuel de ce délai.

La fonction "Geler_traitement" permet à un traitement de geler, c'est-à-dire de bloquer l'exécution d'un autre traitement. L'appel de cette fonction signifie pour le système de gestion du temps 1 qu'il doit suspendre les demandes d'activation du traitement spécifié en paramètre, jusqu'à ce qu'une prochaine autorisation de déclenchement soit effectuée.

Un traitement peut demander le gel d'un autre traitement en appelant la fonction "Geler traitement". Cet appel permet de signifier au système 1 d'inhiber tout déclenchement futur du traitement considéré. Le système 1 met à jour les informations de déclenchement le concernant et rend la main au traitement ayant effectué la requête.
Dès que le traitement considéré invoque la fonction "Accepter_declenchement" pour attendre sa prochaine activation, le système 1 réalise l'équivalent de la fonction "Signaler evenement" (voir ci-après) pour avertir le traitement superviseur du gel effectif du traitement. Dans le cas où ce traitement était déjà en attente sur "Accepter_declenchement" au moment de la demande de gel, le système 1 effectue immédiatement cette action avant de rendre la main au traitement effectuant la requête.
Pour reprendre un processus de déclenchement après un gel, il suffit qu'un traitement appelle la fonction "Declencher_traitement".

Lorsque l'exécution du traitement concerné est effectivement gelée, c'est-à-dire lorsque le traitement a terminé son exécution et est revenu en état d'attente sur la fonction "Accepter declenchement", un événement de type majeur prédéfini "Gel traitement" est généré auprès du traitement superviseur.
Cet appel peut être utilisé pour les traitements apériodiques pour connaître la fin de l'exécution de la partie principale du traitement.
Un tel procédé permet au superviseur de se synchroniser sur la fin d'exécution d'un ensemble de traitements, que leurs activations soient liées ou indépendantes. Le superviseur 20 peut ainsi effectuer un changement dynamique de mode opératoire, synchronisé dans tous les traitements, en appelant la fonction "Geler_traitement" pour arrêter les activations des traitements dont le mode opératoire de fonctionnement doit être changé, puis en appelant pour chacun de ces traitements, la fonction "Declencher_traitement" associée aux paramètres temporels du nouveau mode opératoire de fonctionnement et au paramètre de mode indiquant aux traitements dans quel mode opératoire ils doivent fonctionner.
De cette manière, un changement dynamique de mode opératoire peut être effectué d'une façon simple et synchronisée sans faire intervenir de test d'une variable partagée spécifiant le mode opératoire de fonctionnement.

Il est à noter que le gel du traitement qui est utilisé dans le calcul de l'instant de référence pour les phases n'a aucune incidence sur ce dernier.

La fonction "Terminer traitement" permet d'indiquer au système 1 qu'il doit terminer l'exécution d'un traitement dont l'identificateur est passé en paramètre. A cet effet, il envoie un message de terminaison au traitement concerné. Cette fonction reçoit également en tant que paramètre d'entrée un identifiant de mode qui doit être choisi parmi les identifiants d'événements réservés à la terminaison.

Un traitement tel que le traitement superviseur 50 peut demander au système de mettre un terme à l'exécution d'un autre traitement en appelant la fonction "Terminer_traitement".
Avant de rendre la main au traitement auteur de la requête, le système 1 inhibe tout déclenchement futur du traitement concerné et envoie le message d'arrêt fourni en paramètre à ce traitement, que ce dernier interprétera dès qu'il aura effectué à nouveau l'appel de la fonction "Accepter evenement". Si jamais, ce traitement était déjà en attente dans la fonction "Accepter_declenchement" au moment de la demande de terminaison, il est immédiatement autorisé à effectuer sa partie finale 25, dès que l'exécutif temps réel l'aura activé selon la politique d'ordonnancement.

Le suivi temporel des traitements et la gestion des erreurs contribuent à la réalisation de trois fonctionnalités.
- l'observation du déroulement d'un traitement par accumulation d'enregistrements décrivant les différentes phases de son exécution et les dates correspondantes ;
- la détection d'événements temporels (dépassement d'échéance pour un traitement ou pour une partie d'un traitement) et transmission implicite ou explicite de ces événements au superviseur si elle existe ; et
- la notification purement explicite d'événements applicatifs (définis par le programmeur) auprès du superviseur pour déclencher l'action correspondant à la nature de ces événements.

A cet effet, le suivi temporel des traitements et la gestion des erreurs comprennent notamment les fonctions suivantes :
- "Designer superviseur majeur",
- "Accepter_evenement",
- "Signaler_evenement",
- "Signaler_evenement_date",
- "Supprimer evenement", et
- "Notifier evolution".

La fonction "Designer_superviseur_majeur" permet au traitement qui l'appelle de se déclarer comme responsable de la gestion des événements majeurs. L'appel de cette fonction est effectué par le traitement superviseur 50 lors de son lancement.

La fonction "Accepter evenement" permet au traitement superviseur 50 de majeur de se mettre en attente d'un événement majeur, conformément au schéma général de la structure d'un traitement représentée sur la figure 2.
Cette fonction reçoit en entrée un paramètre identifiant un mode, permettant de définir les caractéristiques de l'appel :
- mode bloquant : l'appel de cette fonction est bloquant jusqu'à ce qu'au moins un événement majeur soit présent dans la liste des événements survenus ; l'événement est alors supprimé de la liste des événements majeur et retourné par la fonction ;
- mode non-bloquant : l'appel de cette fonction est non bloquant, c'est-à-dire que si au moins un événement est survenu, celui-ci est supprimé de la liste des événements majeur et retourné par la fonction ; sinon un code d'erreur "Vide" est retourné par la fonction.

La fonction "Accepter_evenement" reçoit également en tant que paramètre d'appel un "délai avant prochaine attente" qui permet de définir le délai maximum séparant la délivrance d'un événement par le système 1 et le prochain appel de cette fonction par le superviseur 20. L'objectif est de permettre de détecter une anomalie au niveau du superviseur, dans la mesure où celui-ci mettrait un temps trop long à traiter un événement précédent. Une valeur nulle pour ce paramètre n'impose aucune vérification sur le délai séparant la prochaine attente d'événement. La valeur particulière de -1, définie par défaut pour ce paramètre permet de signifier que le délai reste inchangé par rapport à sa valeur courante.

Si ce délai est dépassé, le système exécute alors une séquence critique de réinitialisation, en appelant un sous-programme réservé "Traiter_erreur_fatale" dont le contenu est défini à l'extérieur du système.

L'appel de fonction "Accepter_evenement" retourne l'identificateur de l'événement et l'identificateur du traitement à l'origine de celui-ci.

Il est important de relever que le "délai avant prochaine attente" équivaut pour le superviseur à une échéance de son traitement.

Pour le traitement superviseur 50, il est donc possible de signifier au système 1 une échéance pour le traitement des événements. Cette surveillance est activée en fournissant au système 1 la valeur de cette échéance lors de l'appel à la fonction "Accepter_evenement". Dès que le système 1 est sollicité pour signaler un événement majeur au traitement superviseur 50 qui est assujetti à cette surveillance, le système 1 met à jour sa liste de réveils en calculant la date correspondant à l'échéance de traitement de l'événement, et demande au système d'exploitation 11 d'activer le traitement superviseur 50, en fournissant l'événement à celui-ci. Si le traitement superviseur atteint à nouveau l'appel à la fonction "Accepter evenement" pour attendre l'événement suivant, avant que le système n'ait été réveillé pour l'échéance concernée, ce réveil est désactivé. A l'inverse, si le système se réveille de lui-même à la date de l'échéance et que le traitement n'a pas terminé l'action associée à l'événement, alors un traitement exceptionnel fourni par le système est exécuté pouvant conduire jusqu'à une réinitialisation du système.
Ce traitement exceptionnel est également appelé si le seuil des cumuls des événements à destination du superviseur est franchi.

Les fonctions "Signaler_evenement" et "Signaler_evenement_date" permettent à un traitement de planifier, par l'intermédiaire du système de gestion du temps 1, l'apparition d'un événement exceptionnel. Un délai ou une date absolue, passé en argument permet de spécifier le temps au terme duquel l'événement sera signalé par le système 1. Une valeur caractéristique établie par défaut pour ce paramètre, indique que la signalisation de l'événement doit être immédiate. La nature des événements n'est pas forcément liée au temps et peut influer sur plusieurs traitements.
L'apparition d'un tel événement entraîne la constitution d'un relevé d'observation et une signalisation auprès du traitement superviseur assurant la gestion de l'événement.

Pour obtenir une prise en compte rapide des événements par le superviseur, il suffit d'attribuer à ce traitement au niveau du système d'exploitation une priorité supérieure à celle du traitement qui demande la signalisation. Ainsi, dès que le système de gestion du temps 1 demande l'activation du superviseur, celui-ci s'exécute aux dépens du traitement demandeur.

Ici encore, si une signalisation différée d'événement majeur est programmée, toute nouvelle signalisation différée remplace la précédente.

L'évolution d'un traitement peut donc être suivie à la demande de l'utilisateur, en des points d'exécution que lui-même définit, en appelant la fonction "Signaler evenement". Outre ce mécanisme d'observation, cette fonction permet de signaler au travers d'un événement, le franchissement de l'étape concernée auprès d'un traitement superviseur 50, si celui-ci s'est déclaré comme tel en effectuant une attente d'événement majeur grâce à la fonction "Accepter_evenement". Ainsi, un traitement applicatif N exécute une action i et dans certains cas doit signaler au superviseur 20 que cette action a été exécutée puis exécuter une action i+1. Pour signaler que l'action i a été exécutée, il appelle la fonction "Signaler evenement" en passant en paramètre un identificateur d'événement correspondant à la fin de l'action i, le système lui transmet immédiatement un code de retour. Dans certains autres cas, il doit exécuter une autre action i+2 et signaler qu'il a terminé l'action i+2 en appelant la fonction "Signaler evenement", cet appel retournant immédiatement un code de retour.

En parallèle, le traitement superviseur 50 s'est mis en attente d'un événement en appelant la fonction "Accepter_evenement". A la date demandée par le traitement de signalement de l'événement, le système active le traitement superviseur 50. Suivant l'événement signalé, "fin action i" ou "fin action i+2", le traitement superviseur exécute l'action correspondante de fin de traitement de l'action i ou i+2 et appelle à nouveau la fonction "Accepter_evenement" pour se mettre en attente d'un nouvel événement.

Si lors de la signalisation, le traitement superviseur se trouve en attente d'événement, alors il est traité immédiatement par celui-ci. A l'inverse, si ce traitement est en train de traiter un événement antérieur, ce nouvel événement est mémorisé dans la file d'attente d'événements associée au traitement superviseur.

La fonction "Supprimer_evenement" permet d'effacer la dernière demande différée émise par un traitement quelconque pour notifier une évolution ou signaler un événement majeur. Le choix entre une demande de signalisation ou une demande de notification se fait au moyen d'un paramètre d'appel de classe d'événement.

Ici encore, si une signalisation différée d'événement majeur est programmée, toute nouvelle signalisation différée remplace la précédente.

La fonction "Notifier evolution" permet de vérifier le respect d'une échéance intermédiaire dans un traitement. Cela est réalisé en précisant dans un paramètre, le délai maximum jusqu'à la prochaine notification.

Une séquence d'instructions peut ainsi être surveillée par un appel à cette fonction au début et à la fin de cette séquence.
Cette fonction introduit une date dans la liste des réveils du système 1. Si le traitement concerné invoque la fonction "Notifier evolution" avant le réveil du système associé à l'échéance, alors l'instant de ce réveil est désactivé.

Dans le cas où le réveil du système, prévu pour cette échéance, intervient avant que le traitement concerné ait terminé la séquence d'instructions surveillée, et donc exécuté à nouveau la fonction "Notifier evolution", le système enregistre l'anomalie et génère un événement majeur prédéfini "Depassement_echeance_ intermédiaire" qui est transmis à l'instance responsable définie par l'utilisateur, c'est-à-dire un traitement dit superviseur qui s'est mis en attente de réception d'un événement grâce à l'appel "Accepter_evenement". Si aucun traitement n'a effectué cet appel pour cet événement, aucun message n'est transféré par le système. Si au contraire, un tel traitement existe et qu'il n'est pas en train de traiter un événement antérieur, ce nouvel événement est traité immédiatement par le traitement superviseur sinon il est mémorisé dans la file d'attente d'événements associée au traitement superviseur. Ce mécanisme appliqué à une erreur de dépassement d'échéance intermédiaire n'a aucune portée sur le traitement responsable de son apparition.

Une valeur nulle pour ce délai inhibe toute vérification d'échéance intermédiaire. La notification d'événement conduit dans un premier temps à l'enregistrement de celui-ci dans un relevé d'observation. La date de l'apparition de l'événement n'est pas transmise au traitement superviseur 50.

En ce qui concerne le délai maximum jusqu'à la prochaine notification, lorsqu'une notification contient un délai maximum, le passage du même traitement par une nouvelle notification avant l'écoulement de ce délai arrête son comptage ou le remplace par une nouvelle valeur, selon que la nouvelle notification comporte un délai maximum nul ou une valeur significative.

En définitive, le système de gestion du temps 1 propose, grâce à son interface 6, des fonctions permettant de contrôler l'exécution de traitements périodiques ou apériodiques et des outils de surveillance temporelle et de gestion d'événements. Cependant, ces fonctions doivent être utilisées en respectant certaines contraintes qui sont introduites par l'architecture du système et le taux d'occupation des ressources, de ce dernier.

La condition de déclenchement d'une transition est une combinaison d'événements logiques 41, chacun de ces événements étant rattaché à un sous-système 31 qui a la responsabilité de le générer. Un traitement, existant si possible, est recherché dans ce sous-système pour produire cet événement : la génération d'un événement peut être conditionnée par le choix d'un mode opératoire 42 du traitement du traitement de façon qu'il soit possible à tout moment de l'inhiber en agissant par le service de gestion du temps. Sinon il faut créer un traitement dédié à la production de l'événement. Lorsqu'un traitement périodique 33 ou apériodique 34 s'exécute, il s'appuie sur ses acquisitions ou sur des résultats de calcul pour décider si l'événement est arrivé. En admettant qu'un capteur utilise un signal électronique en présence d'un événement physique, il est toujours nécessaire de lui associer un traitement logiciel qui a en charge de produire un événement logique.

En cas de présence effective d'un événement physique, le traitement qui en assure la détection appelle la fonction "Signaler_evenement" fournie par l'interface 6 du service de gestion du temps puis poursuit son exécution. S'il s'agit par contre d'une prédiction d'événement suffisamment réaliste pour être crédible ou encore qu'il soit nécessaire d'anticiper son arrivée, le traitement appelle la fonction "Signaler_evenement_date" du service de gestion du temps, ce qui équivaut à différer le signalement de l'événement à la date indiquée.

Par ailleurs, dans un système temps réel, on distingue généralement trois types d'événements :
- les événements systématiques qui apparaissent dans le cadre du fonctionnement prévu du système ;
- les événements planifiés (à moyen ou long terme) qui sont générés si un opérateur les décide ;
- les événements fortuits qui ne sont pas attendus dans le cadre d'un fonctionnement pré-établi ou planifié.

Les événements systématiques et les événements fortuits sont générés de la même façon. Ce qui les distingue est leur modalité de détection. En effet, un événement systématique est prévu d'arriver dans des états particuliers du système, alors qu'un événement fortuit arrive dans n'importe quel état. Pour les premiers, on utilise la facilité du changement de mode d'un traitement pour autoriser leur génération.

Toutefois certaines anomalies sont détectées automatiquement par le service de gestion du temps 1. Ce sont les anomalies de durée d'exécution des traitements. Ces anomalies nécessitent d'encadrer les opérations concernées par des appels aux fonctions "Notifier evolution" fournie par l'interface 6 du service de gestion du temps.
Le service de gestion du temps 1 mémorise tous les événements qui lui sont adressés et les délivre selon leur priorité à un traitement consommateur. Seul peut les lire le traitement 50 qui s'est déclaré comme superviseur par appel à la fonction du service "Designersuperviseur majeur".

Le traitement 50 du superviseur 20 est une tâche apériodique et se présente sous la forme d'une boucle de traitement telle que décrite ci-avant en référence à la figure 2. Cette boucle débute par un appel à la fonction "Accepter_evenement" fournie par l'interface 6 du service de gestion du temps. En l'absence d'événement, cette fonction met le superviseur en attente ce qui permet d'attribuer le processeur 12 à un autre traitement. Si un événement non différé est reçu par le service, le superviseur 20 reprend aussitôt son exécution du fait de sa forte priorité et récupère l'événement pour le traiter.

Le superviseur 20 accède dans la base de données 32 à une table 37 (figure 3) représentant toutes les transitions du diagramme d'états du système.
Sur la figure 3, la base de données 32 comprend deux tables définissant l'automate de l'application 2, à savoir la table d'états et de transitions 37 et la table de description des transitions 38. La table d'états et de transitions 37 comprend pour chaque transition de l'automate un identifiant de transition, un identifiant de l'état de départ et un identifiant de l'état d'arrivée. La table 38 de description des transitions comprend pour chaque identifiant de transition référencé dans la table 37 une liste d'événements devant figurer dans la liste des événements 52 en cours non traités pour exécuter la transition, éventuellement une liste de conditions portant sur les événements de la liste associée ou des variables d'état du système temps réel, devant être réalisées pour exécuter la transition, une liste d'actions à exécuter pour effectuer la transition vers l'état d'arrivée, et un profil temporel des actions.

Une action concerne un traitement périodique ou apériodique dans un sous-système 31. Elle consiste à le déclencher, à l'interrompre, à le terminer ou encore à modifier son mode opératoire 42. Selon le type d'action à effectuer, le superviseur 20 fait appel respectivement aux fonctions de l'interface 6 du service de gestion du temps :
- "Declencher_traitement" ou "Declencher_traitement_date" pour déclencher ou changer de mode ;
- "Geler_traitement" et "Terminer traitement" pour respectivement interrompre un déclenchement et terminer un traitement.

Le traitement précis à effectuer est défini par le mode 42 fourni en paramètre d'appel des fonctions Declencher_traitement" ou "Declencher_traitement_date" et "Terminer traitement".

Le profil temporel définit si les déclenchements sont parallèles ou séquentiels, et s'ils se font avec des déphasages. Il indique également les périodes des traitements périodiques. Pour les changements de mode, il donne le nouveau déphasage et éventuellement la nouvelle période. Enfin, il est possible de fixer des échéances pour les traitements périodiques ou apériodiques. Ces contraintes temporelles 43 sont fournies en paramètre d'appel des fonctions "Declencher_traitement" ou "Declencher_traitement_date".

Par ailleurs, le superviseur conserve en mémoire l'état courant 51 de l'automate. Lorsqu'il est activé, le superviseur parcourt à la suite les transitions possibles, c'est-à-dire associées à l'état courant 51. A partir de table 38 descriptive des transitions, il recherche la présence de l'événement dans les transitions possibles trouvées. Si l'événement n'est associé à aucune transition trouvée, l'événement est perdu et le superviseur se remet en attente d'un nouvel événement. Dans le cas contraire, pour chaque transition trouvée, associée à l'événement, il détermine si toutes les conditions associées à la transition sont satisfaites. Si l'événement est trouvé dans une transition et si toutes les conditions de la transition sont satisfaites, le superviseur efface la liste 52 des événements à traiter et procède à la mise en oeuvre de la transition en mettant à jour l'état courant de l'automate à l'aide de la table 37, en exécutant les actions correspondant à la transition, spécifiées dans la table 38.

Si l'événement est associé à d'autres événements non arrivés, il est conservé en mémoire dans la liste des événements arrivés 52 pour être analysé lorsqu'un autre événement est transmis au superviseur par le système de gestion du temps.

Dans le cas contraire, si aucune des transitions trouvées n'est associée à des conditions satisfaites, l'événement est perdu.

A la fin de ces traitements, le superviseur revient en début de boucle 21.

Si les traitements associés à une même transition sont séquentiels, le superviseur est amené à attendre des événements de fin d'exécution indiquant qu'un traitement est terminé avant de déclencher le traitement suivant.
Si des événements autres que des événements de fin de traitement arrivent pendant l'exécution des actions d'une transition, ils sont mémorisés par le superviseur dans une liste d'événements non pris en compte. Au traitement du dernier événement de fin de traitement de la transition, cette liste d'événements non pris en compte est parcourue pour traiter successivement tous les événements dans l'ordre de leur arrivée pendant l'exécution de la transition.

D'une manière générale, il est possible de déclencher toute tâche autant de fois que l'on veut tant que l'on n'a pas demandé sa terminaison. En effet la terminaison restitue au système toutes les ressources nécessaires à l'exécution du traitement.
Si un profil temporel prévoit des déclenchements séquentiels, les traitements concernés doivent générer s'ils sont dans le mode opératoire réservé à cet effet des événements identifiant la fin de la boucle 21. Un tel événement est envoyé au superviseur 20 en appelant la fonction du service de gestion du temps "Signaler_evenement".

Le superviseur 20 initialise tous les traitements du système et en assure leur contrôle intégral grâce aux actions dont il dispose. En présence d'événements particuliers, il peut décider de laisser l'initiative à des opérateurs à condition qu'ils respectent des procédures.

Le superviseur est informé de toute anomalie qui nécessite des actions au niveau système; une telle anomalie est détectée par un traitement d'un sous-système, puis signalée au superviseur sous forme d'un événement spécifique. L'automate spécifié dans la base de données 32 comporte de préférence des transitions d'anomalie associées à des actions de diagnostic et correctives pour traiter des événements interdits ou de signalement d'anomalie.

En outre, dans les cas d'anomalie du système informatique, une visibilité sur des états détaillés du logiciel est utile. En vue d'un diagnostic fin, le service de gestion du temps conserve dans une table un historique non seulement des événements système, mais également des derniers événements relatifs aux comportements temps réel des tâches et du service lui-même.

Une défaillance du superviseur paralyse donc le système entier ; pour pouvoir néanmoins tenter une reconfiguration, le service de gestion du temps 1 est capable de surveiller le dépassement d'échéance par le traitement du superviseur. Cette échéance est paramétrée lors de l'appel par le superviseur à la fonction du service de gestion du temps "Accepter_evenement". Si le dépassement est détecté, le service de gestion du temps qui invoque une procédure logicielle d'urgence "Traiter_erreur_fatale" que l'on programme librement.

Il s'avère que le système qui vient d'être décrit ne permet pas de gérer efficacement les événements planifiés à moyen ou long terme et ce sans surcharger le système de gestion temps, du fait que ce dernier effectue une planification temporelle à très court terme.

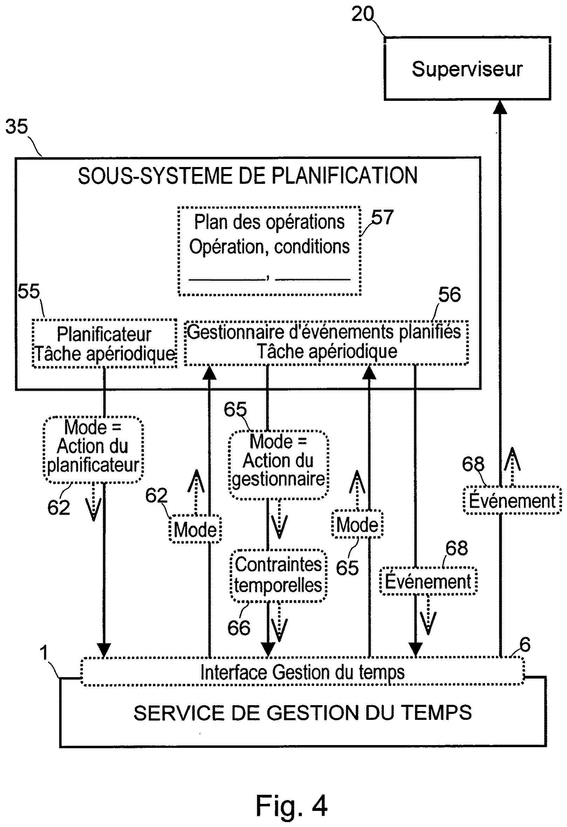

Pour résoudre ce problème, la présente invention se base sur la constatation que les événements planifiés sont générés de manière différente du fait qu'ils sont programmés ou déprogrammés à des moments quelconques pour être accomplis dans le futur.
Pour gérer les événements planifiés, la présente invention prévoit en outre comme représenté sur la figure 4 un sous-système de planification 35.
Sur cette figure, le sous-système de planification 35 comprend un traitement de gestion des événements planifiés 56 et un traitement de planification 55.

Le sous-système de planification 35 a la charge de gérer et planifier des requêtes opératoires, c'est-à-dire des requêtes émises par un opérateur ou par l'environnement du système contrôlé par l'application temps réel. Plus précisément, il définit l'opération à réaliser et ses conditions de mise en oeuvre. Les conditions de mise en oeuvre d'une opération rassemblent implicitement ou explicitement les événements qui activent l'opération et éventuellement qui y mettent fin. Le sous-système de planification 35 comprend un planificateur 55 d'opérations et un gestionnaire d'événements planifiés 56. Le planificateur qui a pour rôle de classer les opérations selon un ordre chronologique, est une tâche apériodique déclenchée en fonction des requêtes qui parviennent au système.

Au cours de son exécution, le planificateur crée ou met à jour un plan d'opérations 57 associant à chaque opération des conditions de déclenchement.

Le gestionnaire d'événements planifiés 56 est un traitement apériodique générique qui a pour rôle de lancer et contrôler l'exécution des opérations.
Tant qu'il n'existe pas d'opération planifiée, le gestionnaire d'événements planifiés 56 est en attente comme toute autre tâche d'un signal de déclenchement émis par le service de gestion du temps 1. Toute nouvelle opération suppose un déclenchement du planificateur 55. A la fin de son exécution, le planificateur provoque le déclenchement du gestionnaire d'événements planifiés.

Pour commander un déclenchement, le planificateur 55 appelle la fonction "Declencher_traitement" du service de gestion du temps en désignant le gestionnaire d'événements planifiés et en choisissant un mode particulier 62 indiquant que le déclenchement a été effectué par le planificateur. Le gestionnaire d'événements planifiés 56 reconnaît dans le mode reçu 62 qu'il s'agit d'une action du planificateur 55. Il analyse alors les informations de planification de l'opération et en particulier la nature de l'événement planifié, pour en déduire une prédiction de l'instant d'arrivée de l'événement.
A la fin de cette occurrence d'exécution, le gestionnaire d'événements planifiés programme son prochain déclenchement à la date calculée. Pour cela, il appelle la fonction "Declencher_traitement_date" du service de gestion du temps en se désignant lui-même comme destinataire et dans un mode 65 distinct du précédent 62, spécifiant qu'il s'est lui-même déclenché.
A l'instant désiré, le service de gestion du temps réveille le gestionnaire d'événements planifiés 56 qui reconnaît dans le mode reçu 65 qu'il s'est lui-même déclenché et donc qu'il s'agit de l'instant auquel l'opération doit être lancée, ou de l'instant à partir duquel le système est autorisé à détecter l'arrivée d'un ou plusieurs événements requis pour déclencher l'opération.

Si le critère de lancement l'opération est uniquement un critère de temps, le gestionnaire d'événements planifiés appelle le service de gestion du temps pour lui demander d'envoyer au superviseur 20 un événement système 68 représentatif de la réalisation des conditions prévues de déclenchement de l'opération. Cet événement système 68 reçu par le superviseur 20 doit être prévu dans le diagramme d'états et de transitions, spécifié dans la base de données 32, et l'opération à exécuter doit correspondre aux actions de la transition.

Dans le cas où l'opération doit être lancée à l'arrivée d'un ou plusieurs événements spécifiques requis, ces événements pouvant être générés par plusieurs sous-systèmes, il faut demander aux sous-systèmes concernés d'autoriser la génération des événements jusqu'au déclenchement de l'exécution de l'opération. La méthode consiste à déléguer cette demande au superviseur 20 sous la forme d'un événement d'autorisation 68. Cet événement d'autorisation 68 reçu par le superviseur doit être prévu dans le diagramme d'états et de transitions, spécifié dans la base de données 32. La transition correspondante ne fait pas changer l'état courant 51 du système, mais modifie simplement les modes opératoires des traitements pour qu'ils soient autorisés à produire les événements attendus.

En définitive, l'opération sera déclenchée au moment où tous les événements attendus seront transmis au superviseur par le service de gestion du temps conformément aux actions prévues dans le diagramme d'états et de transitions, spécifié dans la base de données 32.

Dans les deux alternatives, une fois que le gestionnaire d'événements planifiés a envoyé au superviseur 20 l'événement 68, l'opération suivante est récupérée pour analyse dans le plan des opérations 57 ou, si aucune nouvelle opération n'est à exécuter, se remettre en attente du prochain déclenchement par le planificateur. Le gestionnaire d'événements planifié peut attendre un signal d'acquittement du superviseur indiquant que l'exécution de l'opération en cours est terminée, avant de prendre en compte une nouvelle opération. Dans ce cas, le gestionnaire d'événements peut surveiller la durée de l'exécution des traitements de l'opération en programmant une échéance à l'aide de la fonction "Notifier evolution" en début de boucle 21.

Il est à noter qu'un planificateur dynamique doit pouvoir changer le prochain événement planifié sans qu'il y ait d'opération engagée. Il lui suffit dans un premier temps d'annuler l'événement temporel que le gestionnaire d'événements planifiés a programmé. Pour cela le planificateur 55 invoque la fonction "Geler_traitement" du service de gestion du temps en désignant le traitement du gestionnaire d'événements planifiés 56. Ceci a pour effet de détruire l'événement dans le service de gestion du temps.
Ensuite, le planificateur appelle la fonction "Declencher_traitement" du service de gestion du temps en désignant le gestionnaire d'événements planifiés et en choisissant le mode particulier 65 identifiant une nouvelle opération.

## Revendications

1. Procédé de gestion et de traitement d'événements apparaissant dans un système temps réel dans lequel des traitements applicatifs (31) sont exécutés de manière périodique ou apériodique et communiquent entre eux à l'aide de fonctions transmises à un système de gestion du temps (1), chaque traitement applicatif comprenant au moins un appel à une fonction de mise en attente d'activation, qui place le traitement dans un état d'attente d'une fonction d'activation transmise par le système de gestion du temps, les fonctions transmises par les traitements applicatifs au système de gestion du temps comprenant des fonctions de génération d'événement,
- le système de gestion du temps mémorisant tous les événements qui lui sont adressés et les délivrant selon leur priorité à un traitement superviseur (50) en lui transmettant l'événement à traiter, le traitement superviseur ayant accès à un diagramme d'états et de transitions (32) modélisant le fonctionnement du système réel, et
- le traitement superviseur recherche dans le diagramme d'états et de transitions les transitions possibles à partir d'un état courant (51) du système temps réel, et pour chaque transition possible, il détermine si des conditions d'exécution de la transition spécifiées dans le diagramme d'états et de transitions sont satisfaites du fait de la présence de l'événement à traiter, et si les conditions d'exécution de la transition sont satisfaites, il met à jour l'état courant du système temps réel et exécute des actions correspondant à la transition, spécifiées dans le diagramme d'états et de transitions, via le système de gestion du temps, ces actions portant sur la gestion du déroulement de l'exécution des traitements applicatifs (31).

2. Procédé selon la revendication 1,
tel que si parmi les transitions trouvées, l'événement à traiter est associé à d'autres événements à traiter qui ne sont pas encore arrivés, le traitement superviseur (50) mémorise l'événement à traiter dans une liste d'événements à traiter (52).

3. Procédé selon la revendication 1 ou 2,
tel que si dans toutes les transitions trouvées, l'événement à traiter n'est pas associé à d'autres événements à traiter qui ne sont pas encore arrivés, et qu'aucune condition d'exécution de transition n'est satisfaite, l'événement à traiter est perdu et le traitement superviseur (50) se remet en attente d'un nouvel événement.

4. Procédé selon l'une des revendications 1 à 3,
tel que le traitement superviseur (50) est une tâche apériodique qui se présente sous la forme d'une boucle de traitement (21) comportant un appel à une fonction d'attente d'événement à traiter du système de gestion du temps (1), le traitement superviseur appelant la fonction d'attente d'événement à traiter à la fin de l'exécution d'une transition ou si aucune transition ne peut être exécutée.

5. Procédé selon l'une des revendications 1 à 4,
tel que les actions exécutées par le traitement superviseur (50) lors de l'exécution d'une transition sont des actions de déclenchement, d'interruption, de terminaison et/ou de changement de mode opératoire (42) de traitements périodiques (33) ou apériodiques (34).

6. Procédé selon la revendication 5,
tel que les actions des transitions spécifiées dans le diagramme d'états et de transitions (32) sont associées à des contraintes temporelles définissant si les traitements déclenchés par ces actions doivent être exécutés en parallèles ou séquentiellement, et pour chaque traitement à déclencher, une durée de déphasage de déclenchement, une durée maximum d'exécution, et une période d'activation dans le cas de traitements périodiques.

7. Procédé selon la revendication 6,
tel que dans le cas où des actions d'une transition doivent être exécutées séquentiellement, chaque action commande au système de gestion du temps (1) de générer un événement de fin de traitement à la fin de son exécution au moins partielle, le traitement superviseur (50) se mettant en attente de cet événement avant d'exécuter l'action suivante.

8. Procédé selon la revendication 6 ou 7,
tel que le déclenchement d'un traitement (33, 34) par le traitement superviseur (50) est effectué par un appel d'un service du système de gestion du temps (1) spécifiant le traitement à déclencher, un mode opératoire, une durée de déphasage de déclenchement, une durée maximale d'exécution, et une période d'activation dans le cas d'un traitement périodique.

9. Procédé selon l'une des revendications 1 à 8,
tel qu'il comprend en outre :
- une phase de planification d'une opération à moyen ou long terme, au cours de laquelle un traitement de planification (55) insère une opération dans un plan d'opérations (57) et déclenche un traitement de gestion d'événements planifiés (56) par un appel au système de gestion du temps (1), associé à un mode d'exécution (62) indiquant que le traitement de gestion d'événements planifiés est déclenché par le traitement de planification,
- une phase de programmation de l'exécution d'une prochaine opération spécifiée dans le plan d'opérations (57), au cours de laquelle le système de gestion du temps déclenche le traitement de gestion d'événements planifiés qui détecte par le mode d'exécution (62) qu'il a été activé par le traitement de planification, analyse des informations relatives à la prochaine opération à exécuter pour déterminer l'instant d'activation de la prochaine opération, et commande par un appel au système de gestion du temps une nouvelle exécution du traitement de gestion d'événements planifiés à l'instant d'activation de l'opération, associée à un mode d'exécution (65) indiquant que le traitement de gestion d'événements planifiés a été déclenché par lui-même,
- une phase de déclenchement de l'exécution d'une opération, au cours de laquelle le système de gestion du temps déclenche le traitement de gestion d'événements planifiés qui détecte par le mode d'exécution (65) qu'il a été activé par lui-même, et commande au système de gestion du temps de générer un événement (68) de déclenchement de l'opération à destination du traitement superviseur (50), et
- une phase d'exécution de l'opération, au cours de laquelle le traitement superviseur reçoit l'événement (68) de déclenchement de l'opération et exécute l'opération conformément à une transition prévue dans le diagramme d'états et de transitions (32).

10. Procédé selon la revendication 9,
tel
que l'exécution de la prochaine opération est subordonnée à l'arrivée d'au moins un autre événement émis par un traitement applicatif (31).

11. Procédé selon la revendication 10,
tel qu'à la suite de la commande de génération d'un événement (68)
de déclenchement d'opération, le traitement de gestion d'événements planifiés (56) analyse des informations relatives à une prochaine opération à exécuter définie dans le plan d'opération (57), pour déterminer l'instant d'activation de l'opération, et commande par un appel au système de gestion du temps (1) une nouvelle exécution du traitement de gestion d'événements planifiés à l'instant d'activation de l'opération, associée à un mode (65) indiquant que le traitement de gestion d'événements planifiés a été déclenché par lui-même.

12. Procédé selon la revendication 11,
tel qu'avant de prendre en compte une nouvelle opération, le traitement de gestion d'événements planifiés (56) attend la fin de l'opération planifiée en cours d'exécution, signalée par le traitement superviseur (50).

13. Système temps réel comprenant des traitements applicatifs (2) exécutés de manière périodique ou apériodique, une unité de traitement (12), un système d'exploitation temps réel (11), une horloge temps réel (13), un système de gestion du temps (1) rassemblant des mécanismes (3) pour activer et désactiver les traitements applicatifs (2) à des instants déterminés, et surveiller l'exécution de ceux-ci, chaque traitement applicatif étant conçu pour présenter un état inactif (23) dans lequel il est en attente d'activation par le système de gestion du temps (1), au moins un état actif (24) dans lequel il exécute des opérations normales et un état de terminaison (25) dans lequel il exécute des opérations de terminaison avant de se terminer, et le système de gestion de temps mémorisant tous les événements qui lui sont adressés et les délivrant selon leur priorité à un traitement,ledit système comprenant en outre un traitement superviseur (50) pour recevoir et traiter tous les événements générés par le système de gestion du temps (1), le traitement superviseur ayant accès à un diagramme d'états et de transitions (32) modélisant le fonctionnement du système temps réel, et à une zone mémoire mémorisant un état courant (51) et une liste d'événements à traiter (52), le traitement superviseur comprenant des moyens pour déterminer si une transition est à déclencher en fonction de l'état courant et des événements mémorisés dans la liste des événements à traiter, des moyens pour exécuter des actions, via le système de gestion de temps, correspondant à une transition déclenchée et des moyens pour mettre à jour l'état courant à la suite du déclenchement d'une transition.

14. Système selon la revendication 13,
comprenant en outre un traitement planificateur (55) pour gérer un plan d'opérations (57) dans lequel sont planifiées des opérations à exécuter à moyen ou long terme des opérations, et un traitement de gestion d'événements planifiés (56) ayant accès au plan d'opérations pour déterminer l'instant où une prochaine opération spécifiée dans le plan d'opérations doit être exécutée, et pour commander la génération d'un événement spécifique (68) à destination du traitement superviseur (50) lorsqu'une opération doit être exécutée.

## Patentansprüche

1. Verfahren zur Verwaltung und zur Verarbeitung von Ereignissen, die in einem Echtzeitsystem auftreten, in welchem Anwendungsverarbeitungen (31) periodisch oder aperiodisch durchgeführt werden und mit Hilfe von an ein Zeitverwaltungssystem (1) übertragenen Funktionen miteinander kommunizieren, wobei jede Anwendungsverarbeitung mindestens eine Anforderung an eine Aktivierungsrückstellungsfunktion umfasst, die die Verarbeitung in einen Rückstellungszustand einer von dem Zeitverwaltungssystem übertragenen Aktivierungsfunktion versetzt, wobei die von den Anwendungsverarbeitungen an das Zeitverwaltungssystem übertragenen Funktionen Ereignisgenerationsfunktionen umfassen,
- wobei das Zeitverwaltungssystem alle Ereignisse speichert, die an es adressiert sind und sie gemäß ihrer Priorität einer Supervisorverarbeitung (50) durch Übertragen des zu verarbeitenden Ereignisses an diese übergibt, wobei die Supervisorverarbeitung Zugriff auf ein Zustands- und Übergangsdiagramm (32) hat, das den Betrieb des Echtzeitsystems modelliert, und
- die Supervisorverarbeitung in dem Zustands- und Übergangsdiagramm die möglichen Übergänge ab einem aktuellen Zustand (51) des Echtzeitsystems sucht und sie für jeden möglichen Übergang bestimmt, ob in dem Zustands- und Übergangsdiagramm spezifizierte Ausführungsbedingungen des Übergangs aufgrund der Anwesenheit des zu verarbeitenden Ereignisses erfüllt sind, und, wenn die Ausführungsbedingungen des Übergangs erfüllt sind, sie den aktuellen Zustand des Echtzeitsystems aktualisiert und über das Zeitverwaltungssystem in dem Zustands- und Übergangsdiagramm spezifizierte Aktionen durchführt, die dem Übergang entsprechen, wobei sich diese Aktionen auf die Verwaltung des Ablaufs der Durchführung der Anwendungsverarbeitungen (31) beziehen.

2. Verfahren nach Anspruch 1,
derart, dass, wenn unter den gefundenen Übergängen das zu verarbeitende Ereignis anderen zu verarbeitenden Ereignissen zugeordnet ist, die noch nicht angekommen sind, die Supervisorverarbeitung (50) das zu verarbeitende Ereignis in einer Liste zu verarbeitender Ereignisse (52) speichert.

3. Verfahren nach Anspruch 1 oder 2,
derart, dass, wenn unter allen gefundenen Übergängen das zu verarbeitende Ereignis keinen anderen zu verarbeitenden Ereignissen zugeordnet ist, die noch nicht angekommen sind, und keine Übergangsausführungsbedingung erfüllt ist, das zu verarbeitende Ereignis verloren ist und sich die Supervisorverarbeitung (50) in Erwartung eines neuen Ereignisses zurückstellt.

4. Verfahren nach einem der Ansprüche 1 bis 3,
derart, dass die Supervisorverarbeitung (50) eine aperiodische Aufgabe ist, die sich in Form einer Verarbeitungsschleife (21) darstellt, aufweisend eine Anforderung an eine Rückstellungsfunktion eines zu verarbeitenden Ereignisses des Zeitverwaltungssystems (1), wobei die Supervisorverarbeitung die Rückstellungsfunktion eines zu verarbeitenden Ereignisses am Ende der Ausführung eines Übergangs oder wenn kein Übergang ausführbar ist, anfordert.

5. Verfahren nach einem der Ansprüche 1 bis 4,
derart, dass die von der Supervisorverarbeitung (50) bei der Ausführung eines Übergangs ausgeführten Aktionen Aktionen des Auslösens, der Unterbrechung, der Beendigung und/oder der Änderung des Betriebsmodus (42) von periodischen (33) oder aperiodischen (34) Verarbeitungen sind.

6. Verfahren nach Anspruch 5,
derart, dass die Aktionen der in dem Zustands- und Übergangsdiagramm (32) spezifizierten Übergänge zeitlichen Zwängen zugeordnet sind, die festlegen, ob die durch diese Aktionen ausgelösten Verarbeitungen parallel oder sequentiell ausgeführt werden müssen, und für jede auszulösende Verarbeitung eine Phasenverschiebungsdauer der Auslösung, eine maximale Ausführungsdauer und eine Aktivierungsperiode im Fall von periodischen Verarbeitungen.

7. Verfahren nach Anspruch 6,
derart, dass in dem Fall, in dem Aktionen eines Übergangs sequentiell ausgeführt werden müssen, jede Aktion dem Zeitverwaltungssystem (1) befiehlt, ein Verarbeitungsendereignis am Ende seiner mindestens teilweisen Ausführung zu generieren, wobei sich die Supervisorverarbeitung (50) vor Ausführung der nächsten Aktion in Erwartung dieses Ereignisses versetzt.

8. Verfahren nach Anspruch 6 oder 7,
derart, dass das Auslösen einer Verarbeitung (33, 34) durch die Supervisorverarbeitung (50) durch eine Anforderung eines Services des Zeitverwaltungssystems (1) durchgeführt wird, der die auszulösende Verarbeitung, einen Betriebsmodus, eine Phasenverschiebungsdauer der Auslösung, eine maximale Ausführungsdauer und eine Aktivierungsperiode im Fall einer periodischen Verarbeitung spezifiziert.

9. Verfahren nach einem der Ansprüche 1 bis 8,
derart, dass es ferner umfasst:
- eine Planungsphase einer mittel- oder langfristigen Operation, bei der eine Planungsverarbeitung (55) eine Operation in einen Operationsplan (57) einfügt und eine Verwaltungsverarbeitung geplanter Ereignisse (56) durch eine Anforderung beim Zeitverwaltungssystem (1) auslöst, die einem Ausführungsmodus (62) zugeordnet ist, der anzeigt, dass die Verwaltungsverarbeitung geplanter Ereignisse durch die Planungsverarbeitung ausgelöst ist,
- eine Programmierphase der Ausführung einer nächsten, im Operationsplan (57) spezifizierten Operation, bei der das Zeitverwaltungssystem die Verwaltungsverarbeitung geplanter Ereignisse auslöst, die durch den Ausführungsmodus (62) ermittelt, das sie durch die Planungsverarbeitung aktiviert wurde, Informationen relativ zur nächsten auszuführenden Operation analysiert, um den Zeitpunkt der Aktivierung der nächsten Operation zu bestimmen, und durch eine Anforderung beim Zeitverwaltungssystem eine neue Ausführung der Verwaltungsverarbeitung geplanter Ereignisse zum Zeitpunkt der Aktivierung der Operation befiehlt, die einem Ausführungsmodus (65) zugeordnet ist, der anzeigt, dass die Verwaltungsverarbeitung geplanter Ereignisse von ihm selbst ausgelöst wurde,
- eine Auslösungsphase der Ausführung einer Operation, bei der das Zeitverwaltungssystem die Verwaltungsverarbeitung geplanter Ereignisse auslöst, die durch den Ausführungsmodus (65) ermittelt, dass sie von ihm selbst aktiviert wurde, und dem Zeitverwaltungssystem befiehlt, ein Auslöseereignis (68) der Operation in Richtung der Supervisorverarbeitung (50) zu generieren, und
- eine Ausführungsphase der Operation, bei der die Supervisorverarbeitung das Auslöseereignis (68) der Operation empfängt und die Operation gemäß einem im Zustands- und Übergangsdiagramm (32) vorgesehenen Übergang ausführt.

10. Verfahren nach Anspruch 9,
derart, dass die Ausführung der nächsten Operation der Ankunft mindestens eines anderen, von einer Anwendungsverarbeitung (31) gesendeten Ereignisses untergeordnet ist.

11. Verfahren nach Anspruch 10,
derart, dass infolge des Generationsbefehls eines Operationsauslöseereignisses (68) die Verwaltungsverarbeitung geplanter Ereignisse (56) Informationen relativ zu einer nächsten auszuführenden Operation, die im Operationsplan (57) festgelegt ist, analysiert, um den Zeitpunkt der Aktivierung der Operation zu bestimmen, und durch eine Anforderung an das Zeitverwaltungssystem (1) eine neue Ausführung der Verwaltungsverarbeitung geplanter Ereignisse zum Zeitpunkt der Aktivierung der Operation befiehlt, die einem Modus (65) zugeordnet ist, der angibt, dass die Verwaltungsverarbeitung geplanter Ereignisse von ihm selbst ausgelöst wurde.

12. Verfahren nach Anspruch 11,
derart, dass vor Berücksichtigung einer neuen Operation die Verwaltungsverarbeitung geplanter Ereignisse (56) das Ende der geplanten, in Ausführung begriffenen Operation abwartet, das von der Supervisorverarbeitung (50) mitgeteilt wird.

13. Echtzeitsystem, umfassend Anwendungsverarbeitungen (2), die periodisch oder aperiodisch ausgeführt werden, eine Verarbeitungseinheit (12), ein Echtzeit-Ausführungssystem (11), eine Echtzeituhr (13), ein Zeitverwaltungssystem (1), das Mechanismen (3) vereint, um die Anwendungsverarbeitungen (2) zu bestimmten Zeitpunkten zu aktivieren und deaktivieren und die Ausführung derselben zu überwachen, wobei jede Anwendungsverarbeitung konzipiert ist, um einen inaktiven Zustand (23) aufzuweisen, in welchem sie in Aktivierungserwartung durch das Zeitverwaltungssystem (1) ist, mindestens einen aktiven Zustand (24), in welchen sie normale Operationen durchführt und einen Beendigungszustand (25), in welchem sie Beendigungsoperationen durchführt, bevor sie sich beendet, wobei das Zeitverwaltungssystem alle Ereignisse speichert, die an es adressiert sind und sie gemäß ihrer Priorität einer Verarbeitung übergibt, wobei das System ferner eine Supervisorverarbeitung (50) umfasst, um alle von dem Zeitverwaltungssystem (1) generierten Ereignisse zu empfangen und zu verarbeiten, wobei die Supervisorverarbeitung Zugriff auf ein Zustands- und Übergangsdiagramm (32) hat, das den Betrieb des Echtzeitsystems modelliert, und auf eine Speicherzone, die einen aktuellen Zustand (51) und eine Liste zu verarbeitender Ereignisse (52) speichert, wobei die Supervisorverarbeitung Mittel umfasst, um zu bestimmen, ob ein Übergang in Abhängigkeit vom aktuellen Zustand und von den in der Liste der zu verarbeitenden Ereignisse gespeicherten Ereignissen auszulösen ist, Mittel, um Aktionen über das Zeitverwaltungssystem auszuführen, die einem ausgelösten Übergang entsprechen, und Mittel, um den aktuellen Zustand infolge der Auslösung eines Übergangs zu aktualisieren.

14. System nach Anspruch 13,
umfassend ferner eine Planungsverarbeitung (55), um einen Operationsplan (57) zu verwalten, in dem mittel- oder langfristig auszuführende Operationen der Operationen geplant sind, und eine Verwaltungsverarbeitung geplanter Ereignisse (56), die auf den Operationsplan Zugriff hat, um den Zeitpunkt zu bestimmen, zu dem eine nächste, im Operationsplan spezifizierte Operation auszuführen ist, und um die Generierung eines spezifischen Ereignisses (68) in Richtung der Supervisorverarbeitung (50) zu befehlen, wenn eine Operation ausgeführt werden muss.

## Claims

1. A method for managing and processing events occurring in a real-time system wherein application treatments (31) are periodically or aperiodically executed and communicate with one another by means of functions transmitted to a time management system (1), each application treatment comprising at least one call to an activation standby function, which places the treatment in a standby state for an activation function transmitted by the time management system, the functions transmitted by application treatments to the time management system comprising event generation functions,
- the time management system storing all the events addressed thereto and delivering them according to their priority to a supervisor treatment (50) by transmitting thereto the event to be processed, the supervisor treatment having access to a diagram of states and transitions (32) modeling the operation of the real system, and
- the supervisor treatment searches in the diagram of states and transitions for possible transitions from a current state (51) of the real-time system, and for each possible transition, it determines whether the transition execution conditions specified in the diagram of states and transitions are met because of the presence of the event to be processed, and if the transition execution conditions are met , it updates the current state of the real-time system and executes actions corresponding to the transition, which are specified in the diagram of states and transitions, via the time management system, these actions relating to the management of the execution progress of the application treatments (31).

2. The method according to claim 1, such that if among the transitions found, the event to be processed is associated with other events to be processed which have not yet occurred, the supervisor treatment (50) stores the event to be processed in a list of events to be processed (52).

3. The method according to claim 1 or 2, such that if in all the transitions found, the event to be processed is not associated with other events to be processed which have not yet occurred, and that no transition execution condition is met, the event to be processed is lost and the supervisor treatment (50) returns to the standby state waiting for a new event.

4. The method according to any of claims 1 to 3, such that the supervisor treatment (50) is an aperiodic task which is in the form of a processing loop (21) including a call to a function of standby for an event to be processed of the time management system (1), the supervisor treatment calling the function of standby for an event to be processed at the end of the execution of a transition or if there is no transition it cannot be executed.

5. The method according to any of claims 1 to 4, such that the actions executed by the supervisor treatment (50) when executing a transition consist of actions of triggering, interrupting, terminating and/or changing the operating mode (42) of periodic (33) or aperiodic (34) treatments.

6. The method according to claim 5, such that the actions of the transitions specified in the diagram of states and transitions (32) are associated with time constraints defining whether the treatments triggered by these actions must be executed in parallel or sequentially, and for each treatment to be triggered, a trigger phase shift duration, a maximum execution duration, and an activation period in the case of periodic treatments.

7. The method according to claim 6, such that in the case where actions of a transition must be sequentially executed, each action orders the time management system (1) to generate an end of processing event at the end of its at least partial execution, the supervisor treatment (50) being in standby for this event before executing the next action.

8. The method according to claim 6 or 7, such that the triggering of a treatment (33, 34) by the supervisor treatment (50) is performed by a call from a service of the time management system (1) specifying the treatment to be triggered, an operating mode, a trigger phase shift duration, a maximum execution time, and an activation period in the case of a periodic treatment.

9. The method according to any of claims 1 to 8, such that it further comprises:
- a phase of planning a mid- or long-term operation, during which a planning treatment (55) inserts an operation in a plan of operations (57) and triggers a planned events management treatment (56) by a call to the time management system (1), associated with an execution mode (62) indicating that the planned events management treatment is triggered by the planning treatment,
- a phase of programming the execution of a next operation specified in the plan of operations (57), during which the time management system triggers the planned events management treatment which detects by the execution mode (62) that it has been activated by the planning treatment, analyzes information related to the next operation to be executed in order to determine the activation instant of the next operation, and orders by a call, to the time management system, a new execution of the planned events management treatment at the instant of activation of the operation, associated with an execution mode (65) indicating that the planned events management treatment has been triggered by itself,
- a phase of triggering the execution of an operation, during which the time management system triggers the planned events management treatment which detects by the execution mode (65) that it has been activated by itself, and orders the time management system to generate an event (68) of triggering the operation to the supervisor treatment (50), and
- a phase of executing the operation, during which the supervisor treatment receives the event (68) of triggering the operation and executes the operation in accordance with a transition provided in the diagram of states and transitions (32).

10. The method according to claim 9, such that the execution of the next operation is dependent on the occurrence of at least one other event emitted by an application treatment (31).

11. The method according to claim 10, such that following the order to generate an operation trigger event (68), the planned events management treatment (56) analyzes information related to a next operation to be executed defined in the operation plan (57), in order to determine the activation instant of the operation, and orders by a call, to the time management system (1), a new execution of the planned events management treatment at the instant of activation of the operation, associated with a mode (65) indicating that the planned events management treatment has been triggered by itself.

12. The method according to claim 11, such that before taking into account a new operation, the planned events management treatment (56) waits for the end of the planned operation being executed, signaled by the supervisor treatment (50).

13. A real-time system comprising application treatments (2) periodically or aperiodically executed, a processing unit (12), a real-time operating system (11), a real-time clock (13), a time management system (1) grouping together mechanisms (3) for activating and deactivating the application treatments (2) at determined instants, and monitoring the execution thereof, each application treatment being designed to have an inactive state (23) in which it is in a standby state for activation by the time management system (1), at least one active state (24) in which it executes normal operations and a termination state (25) in which it executes termination operations before being terminated, and the time management system storing all the events addressed thereto and delivering them according to their priority to a treatment, said system further comprising a supervisor treatment (50) for receiving and processing all the events generated by the time management system (1), the supervisor treatment having access to a diagram of states and transitions (32) modeling the operation of the real-time system, and to a memory area storing a current state (51) and a list of events to be processed (52), the supervisor treatment comprising means for determining whether a transition is to be triggered according to the current state and events stored in the list of events to be processed, means for executing actions, via the time management system, corresponding to a triggered transition and means for updating the current state following the triggering of a transition.

14. The system according to claim 13, further comprising a planner treatment (55) for managing a plan of operations (57) in which operations to be executed in the mid- or long-term are planned, and a planned events management treatment (56) having access to the plan of operations to determine the instant a next operation specified in the plan of operations must to be executed, and to order the generation of a specific event (68) to the supervisor treatment (50) when an operation must be executed.
